# EUROPÄISCHE PATENTSCHRIFT

(11) **EP 3 017 587 B1**
(45) Veröffentlichungstag und Bekanntmachung des Hinweises auf die Patenterteilung: **19.10.2022**
(21) Anmeldenummer: 14730902.5
(22) Anmeldetag: 17.06.2014
(51) Int. Cl.: A63F 13/30, G07F 17/32, B60R 11/02, G06F 13/00, H04L 67/02, H04L 69/16

(54) **VERFAHREN ZUM BETREIBEN EINES INFOTAINMENTSYSTEMS EINES KRAFTFAHRZEUGS UND KRAFTFAHRZEUG MIT EINEM INFOTAINMENTSYSTEM**
METHOD FOR OPERATING AN INFOTAINMENT SYSTEM OF A MOTOR VEHICLE AND MOTOR VEHICLE HAVING AN INFOTAINMENT SYSTEM
PROCÉDÉ D'EXPLOITATION D'UN SYSTÈME D'INFORMATION-DIVERTISSEMENT D'UN VÉHICULE AUTOMOBILE ET VÉHICULE AUTOMOBILE COMPRENANT UN SYSTÈME D'INFORMATION-DIVERTISSEMENT

(30) Priorität: 04.07.2013 DE 102013213069
(43) Veröffentlichungstag der Anmeldung: 11.05.2016
(73) Patentinhaber: Bayerische Motoren Werke Aktiengesellschaft, 80809 München (DE)
(72) Erfinder: MICHEL, Maximilian, 81379 München (DE); SCHMIDT, Andre, 04179 Leipzig (DE)
(86) Internationale Anmeldenummer: PCT/EP2014/062647
(87) Internationale Veröffentlichungsnummer: WO 2015/000692

(56) Entgegenhaltungen:
- DE-A1-102010 004 434
- DE-A1-102010 028 944
- US-A1- 2010 257 539
- HSU R C ET AL: "An Integrated Embedded System Architecture for In-Vehicle Telematics and Infotainment System", INDUSTRIAL ELECTRONICS, 2005. ISIE 2005. PROCEEDINGS OF THE IEEE INTER NATIONAL SYMPOSIUM ON DUBROVNIK, CROATIA JUNE 20-23, 2005, PISCATAWAY, NJ, USA,IEEE, Bd. 4, 20. Juni 2005 (2005-06-20), Seiten 1409-1414, XP010850300, DOI: 10.1109/ISIE.2005.1529139 ISBN: 978-0-7803-8738-6
- SIMON ISENBERG ET AL: "Towards a personalized and distributed in-car infotainment experience using the open and web-based webinos middleware", PROCEEDINGS OF THE WORKSHOP ON MULTI-DEVICE APP MIDDLEWARE, 3. Dezember 2012 (2012-12-03), Seiten 1-6, XP055142171, DOI: 10.1145/2405172.2405173

## Beschreibung

Die Erfindung betrifft ein Verfahren zum Betreiben eines Infotainmentsystems eines Kraftfahrzeugs, bei welchem auf einem Rechensystem des Infotainmentsystems zumindest zwei Browserinstanzen bereitgestellt werden, welche jeweils eine Browseranwendung ausführen und hierbei eine graphische Browserdarstellung zur Anzeige auf einer Anzeigeeinrichtung des Infotainmentsystems bereitstellen. Die Erfindung betrifft außerdem ein Kraftfahrzeug mit einem Infotainmentsystem zum Durchführen eines derartigen Verfahrens.

Infotainmentsysteme für Kraftfahrzeuge sind bereits aus dem Stand der Technik in vielfältiger Ausgestaltung bekannt. Ein Infotainmentsystem stellt ein System von Komponenten bzw. Funktionsgeräten dar, welches verschiedene Funktionen im Bereich Komfort und Sicherheit bereitstellt. Die wesentlichen Funktionalitäten eines Infotainmentsystems sind dabei Navigation, Kommunikation, Multimedia sowie Fahrerassistenz. Ein Infotainmentsystem beinhaltet typischerweise ein Rechensystem sowie eine optische Anzeigeeinrichtung. Das Rechensystem umfasst in der Regel zumindest die so genannte Haupteinheit ("Head Unit"), während die Anzeigeeinrichtung zumindest ein Display umfasst, das üblicherweise im Frontbereich des Kraftfahrzeugs, etwa an der Mittelkonsole, angeordnet ist. Es sind aber auch Infotainmentsysteme mit mehreren digitalen Signalprozessoren und mehreren Displays bekannt. So kann beispielsweise neben dem Display im Frontbereich auch zumindest ein Display im Fondbereich des Kraftfahrzeugs eingesetzt werden, welches dann für die Fahrzeuginsassen vorgesehen ist, die sich auf den Fondsitzen befinden. Ein derartiges Display kann beispielsweise an der Rückseite des Fahrersitzes und/oder des Beifahrersitzes angeordnet sein. Zur Ansteuerung des Displays im Fondbereich des Kraftfahrzeugs wird in der Regel ein von der oben genannten Haupteinheit separater digitaler Signalprozessor verwendet, welcher mit der Haupteinheit zum Datenaustausch elektrisch gekoppelt ist, etwa über einen Fahrzeugbus oder dergleichen.

Es ist außerdem bereits Stand der Technik, auf dem Rechensystem eines Infotainmentsystems einen Browser bereitzustellen, wie beispielsweise den HTML5-Browser. Es können bekanntlich auch mehrere Browserinstanzen gleichzeitig ausgeführt werden, welche jeweils eine eigene Browseranwendung ausführen. Unter einer "Browseranwendung" wird dabei eine Webanwendung oder Webapplikation verstanden, d.h. ein Anwendungsprogramm, welches mithilfe des Browsers ausgeführt wird. Die Browserinstanz stellt dabei eine graphische Browserdarstellung bereit, welche zur Anzeige auf einem Display vorgesehen ist und üblicherweise ein Browserfenster sowie in diesem Fenster angezeigte Dateninhalte beinhaltet. Eine Browseranwendung kann dabei eine Offline-Anwendung oder aber eine Online-Anwendung sein.

Die Verwendung eines Browsers bei einem Rechensystem eines Kraftfahrzeugs ist beispielsweise aus den Dokumenten US 2009/0077240 A1 sowie US 2003/0076792 A1 bekannt. Dokument DE 10 2010 004 434 A1 offenbart eine Verarbeitungseinheit für Fahrzeuge, in der Endgeräte mit einer Kommunikationskomponente verbunden werden. Dokument US 2010/0257539 A1 beschreibt die Verwendung von Sockets in einem verteilten Rechnersystem. Dokument DE 10 2010 028 944 A1 beschreibt einen Speicher für eine Browserhistorie, der von mehreren Rechner ausgelesen werden kann. Werden auf dem Rechensystem eines Infotainmentsystems mehrere Browserinstanzen ausgeführt, so wäre es wünschenswert, es gäbe eine Möglichkeit, die jeweiligen Browserdarstellungen miteinander zu synchronisieren bzw. die jeweils dargestellten Dateninhalte aneinander angleichen zu können. Im Stand der Technik werden die jeweiligen Browserinstanzen - beispielsweise im Frontbereich einerseits und im Fondbereich andererseits - unabhängig voneinander bereitgestellt, sodass die eine Browserinstanz über keinerlei Informationen darüber verfügt, welche Inhalte aktuell durch die andere Browserinstanz angezeigt werden.

Es ist Aufgabe der Erfindung, einen Weg aufzuzeigen, wie bei einem Verfahren der eingangs genannten Gattung die Funktionalität des Infotainmentsystems im Vergleich zum Stand der Technik erweitert werden kann.

Diese Aufgabe wird erfindungsgemäß durch ein Verfahren sowie durch ein Kraftfahrzeug mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Ein erfindungsgemäßes Verfahren dient zum Betreiben eines Infotainmentsystems eines Kraftfahrzeugs nach Anspruch 1.

Die Funktionalität des Infotainmentsystems wird demnach im Vergleich zum Stand der Technik dadurch erweitert, dass auf dem Rechensystem ein Webserver implementiert wird, unter dessen Vermittlung eine Datenkommunikation zwischen den verschiedenen Browserinstanzen durchgeführt wird. Dazu werden der Webserver sowie die Browserinstanzen mit jeweiligen Sockets ausgestattet, d.h. mit einem Software-Modul, mittels welchem die jeweiligen Prozesse miteinander kommunizieren können. Außerdem wird für den Datenaustausch ein entsprechendes Kommunikationsprotokoll definiert, gemäß welchem die Kommunikation zwischen den Browserinstanzen unter Vermittlung des Webservers erfolgen kann. Durch eine solche Vorgehensweise ist es beispielsweise möglich, die Browserdarstellungen der jeweiligen Browserinstanzen aneinander anzugleichen und somit die angezeigten Dateninhalte quasi zu synchronisieren. Es gelingt somit beispielsweise, die gleichen Dateninhalte auf einem Display im Frontbereich sowie auf einem Display im Fondbereich des Kraftfahrzeugs anzuzeigen. Es können außerdem Applikationen implementiert werden, die auf der Datenkommunikation zwischen den Browserinstanzen beruhen, wie beispielsweise browserbasierte Mehrbenutzerspiele ("Multiuser Games").

Es ist vorgesehen, dass unter Vermittlung des Webservers die Datenkommunikation zwischen zwei Browserinstanzen durchgeführt wird, welche auf ein und demselben Signalprozessor des Rechensystems ausgeführt werden. Somit ist auch eine Datenkommunikation zwischen zwei verschiedenen Browserinstanzen desselben Signalprozessors möglich, sodass beispielsweise zwei separate Browserfenster mit dem gleichen Dateninhalt auf ein und demselben Display angezeigt werden können. Diese Ausführungsform erweist sich jedoch dann als besonders vorteilhaft, wenn mittels des Signalprozessors zwei voneinander separate Displays angesteuert werden, nämlich insbesondere zwei Displays im Fondbereich des Kraftfahrzeugs. Hierbei kann insbesondere eine Applikation - zum Beispiel ein Mehrbenutzerspiel - implementiert werden, welche auf einer Kommunikation zwischen zwei Browserinstanzen beruht, die auf zwei verschiedenen Displays im Fondbereich des Kraftfahrzeugs dargestellt werden.

Unter einem "Webserver" wird ein Software-Modul verstanden, welches auf dem Rechensystem ausgeführt wird und zur Vermittlung von Daten zwischen den Browserinstanzen ausgelegt ist. Zu diesem Zwecke kann auf dem Webserver eine zentrale "Message-Broker"-Applikation implementiert werden. Die Browserinstanzen verbinden sich dann mit der zentralen "Message-Broker"-Applikation über die jeweiligen Sockets.

Der Webserver stellt vorzugsweise einen Offline-Webserver dar. Dies bedeutet, dass die Datenkommunikation zwischen den Browserinstanzen unter Vermittlung des Webservers ausschließlich fahrzeugintern erfolgt und diese Daten nicht an das Internet übermittelt werden. Bevorzugt hat der Webserver auch keine Anbindung an das Internet, sodass der Webserver ausschließlich zur Vermittlung der Nachrichten zwischen den verschiedenen Browserinstanzen dient.

Bei den zumindest zwei Browserinstanzen kann es sich um voneinander unabhängige Prozesse handeln, die separat voneinander auf dem Rechensystem ausgeführt werden. Es kann sich bei einer Browserinstanz optional aber auch um ein so genanntes "Thread" (z.B. Tab) handeln, d.h. um einen Ausführungsstrang bzw. einen Teil eines bestehenden Prozesses. Eine Browserinstanz kann beispielsweise auch mehrere Tabs aufweisen. Um eine Webseite anzeigen zu können, benötigt es jedoch mindestens einen Tab. Ein Tab ist dann wieder eine Art Ausführungsstrang.

Die Datenkommunikation erfolgt also gemäß einem vorbestimmten Kommunikationsprotokoll. Dieses Kommunikationsprotokoll kann beinhalten, dass durch eine Sende-Browserinstanz an den Webserver eine Nachricht übermittelt wird, welche zumindest eine Empfangs-Browserinstanz bzw. ihren Socket eindeutig definiert und die zu übermittelnden Daten beinhaltet, welche dann durch den Webserver an die zumindest eine Empfangs-Browserinstanz weitergeleitet werden. Ein solches Kommunikationsprotokoll kann ohne viel Aufwand implementiert werden und ermöglicht eine zuverlässige Datenübertragung von der Sende-Browserinstanz an die Empfangs-Browserinstanz unter Vermittlung des Webservers, ohne dass eine Rückmeldung erforderlich ist. Von der Sende-Browserinstanz (Browser A) kann an den Webserver beispielsweise eine Nachricht mit dem folgenden Format übermittelt werden:

```
 Browser A → Server
 {
"  receiver": [
    "Browser B",
    "Browser C",
    "Browser n"
  ],
  "data": {
    "var":"..."
    }
 }
```

Die Nachricht, welche dann von dem Webserver an die zumindest eine Empfangs-Browserinstanz (Browser B) übermittelt wird, kann beispielsweise folgendermaßen aussehen:

```
 Server → Browser B
 {
  "sender": "Browser A",
  "data": {
    "var":"..."
    }
 }
```

Werden in der Nachricht der Sende-Browserinstanz also mehrere Empfangs-Browserinstanzen angegeben, so werden die Daten durch den Webserver vorzugsweise einzeln an die jeweiligen Empfangs-Browserinstanzen übermittelt. Es erfolgt somit vorzugsweise kein "Broadcasting", und die Daten werden von dem Webserver in Form von Einzelnachrichten an die jeweiligen Browserinstanzen übermittelt. Somit ist gewährleistet, dass die Daten lediglich an diejenigen Empfangs-Browserinstanzen übermittelt werden, welche auch in der Nachricht eindeutig definiert sind, welche von der Sende-Browserinstanz an den Webserver übermittelt wird. Der Webserver kann in seiner Nachricht an die Empfangs-Browserinstanz auch die Sende-Browserinstanz eindeutig angeben, von welcher die übermittelten Daten stammen.

Im Rahmen der Datenkommunikation zwischen den Browserinstanzen werden vorzugsweise textbasierte Daten übermittelt. Es können dabei vorzugsweise HTML-Daten übermittelt werden. Als sehr vorteilhaft haben sich auch Daten im Format JSON und/oder XML erwiesen, weil hier nur die Rohdaten übertragen werden können und kein HTML zur Darstellung übertragen zu werden braucht. Dies verbessert die Effizienz bei der Datenübertragung. Bei diesen textbasierten Dokumenten kann es sich beispielsweise um Daten handeln, die aktuell durch die Sende-Browserinstanz verarbeitet bzw. ausgeführt werden. Die Empfangs-Browserinstanz hat somit die Möglichkeit, eine gleiche Browserdarstellung bereitzustellen, wie sie zum aktuellen Zeitpunkt auch durch die Sende-Browserinstanz erzeugt wird.

Allgemein gesagt, können im Rahmen der Datenkommunikation von einer Sende-Browserinstanz an eine Empfangs-Browserinstanz Daten übermittelt werden, welche die aktuell ausgeführte Browseranwendung und/oder Browserdarstellung der Sende-Browserinstanz angeben. Die durch die Empfangs-Browserinstanz angezeigten Dateninhalte können somit an die Browserdarstellung der Sende-Browserinstanz angeglichen werden.

Werden von einer Sende-Browserinstanz Daten an eine Empfangs-Browserinstanz übermittelt, so erfolgt vorzugsweise keine Antwort bzw. keine Rückmeldung von der Empfangs-Browserinstanz an die Sende-Browserinstanz. Die Empfangs-Browserinstanz kann dabei selbst entscheiden, ob sie die empfangenen Daten umsetzt und die angezeigten Dateninhalte angeglichen werden oder nicht. Dies kann beispielsweise davon abhängig gemacht werden, ob und welche Browseranwendung aktuell durch die Empfangs-Browserinstanz ausgeführt wird.

Unter Vermittlung des Webservers wird die Datenkommunikation in einer Ausführungsform zwischen zwei Browserinstanzen durchgeführt, deren Browserdarstellungen auf voneinander separaten Displays der Anzeigeeinrichtung angezeigt werden. Es können somit Dateninhalte aneinander angeglichen werden, die auf verschiedenen Displays angezeigt werden. Diese Ausführungsform erweist sich insbesondere dann als besonders vorteilhaft, wenn in dem Kraftfahrzeug ein Display im Frontbereich sowie ein Display im Fondbereich eingesetzt werden. Die Datenkommunikation kann aber auch zwischen zwei Browserinstanzen durchgeführt werden, deren Browserdarstellungen auf voneinander separaten Displays angezeigt werden, die im Fondbereich des Kraftfahrzeugs angeordnet sind. Ein Display kann dabei an der Rückseite des Fahrersitzes angeordnet sein, während das andere Display an der Rückseite des Beifahrersitzes angebracht sein kann. Somit können beispielsweise Mehrbenutzerspiele für die Fahrzeuginsassen im Fondbereich implementiert werden.

Ergänzend kann auch vorgesehen sein, dass unter Vermittlung des Webservers die Datenkommunikation zwischen zwei Browserinstanzen durchgeführt wird, welche auf voneinander separaten Signalprozessoren des Rechensystems ausgeführt werden, die miteinander gekoppelt sind. Einer der Signalprozessoren kann die genannte "Haupteinheit" sein, während es sich bei dem anderen Signalprozessor um einen im Fondbereich des Kraftfahrzeugs angeordneten Rechner handeln kann, mittels welchem zumindest ein Display im Fondbereich angesteuert wird. Der Webserver wird dann vorzugsweise lediglich auf einem der Signalprozessoren ausgeführt, nämlich insbesondere auf der "Haupteinheit". Diese Ausführungsform ermöglicht das Angleichen der jeweiligen Browserdarstellungen von Browserinstanzen, die auf unterschiedlichen Signalprozessoren des Kraftfahrzeugs ausgeführt werden.

In einer Ausführungsform kann also vorgesehen sein, dass auf dem einen Signalprozessor eine der Browserinstanzen ausgeführt wird und deren Browserdarstellung auf einem im Frontbereich des Kraftfahrzeugs angeordneten Display angezeigt wird, und dass auf dem anderen Signalprozessor die andere Browserinstanz ausgeführt wird, deren Browserdarstellung auf einem im Fondbereich des Kraftfahrzeugs angeordneten Display angezeigt wird. Beispielsweise können somit im Fondbereich des Kraftfahrzeugs die gleichen Browserinhalte angezeigt werden, wie sie auch auf dem Display im Frontbereich angezeigt werden.

Die Erfindung betrifft außerdem ein Kraftfahrzeug mit einem Infotainmentsystem, wobei das Infotainmentsystem zum Durchführen eines erfindungsgemäßen Verfahrens ausgebildet ist.

Die Erfindung wird nun anhand eines bevorzugten Ausführungsbeispiels sowie unter Bezugnahme auf die beigefügten Zeichnungen näher erläutert.

Es zeigen:
- Fig. 1: in schematischer Darstellung einen Frontbereich eines Innenraums eines Kraftfahrzeugs gemäß einer Ausführungsform der Erfindung;
- Fig. 2: in schematischer Darstellung einen Fondbereich des Kraftfahrzeugs;
- Fig. 3: ein Blockdiagramm eines Infotainmentsystems des Kraftfahrzeugs; und
- Fig. 4: ein Sequenzdiagramm eines Verfahrens gemäß einer Ausführungsform der Erfindung.

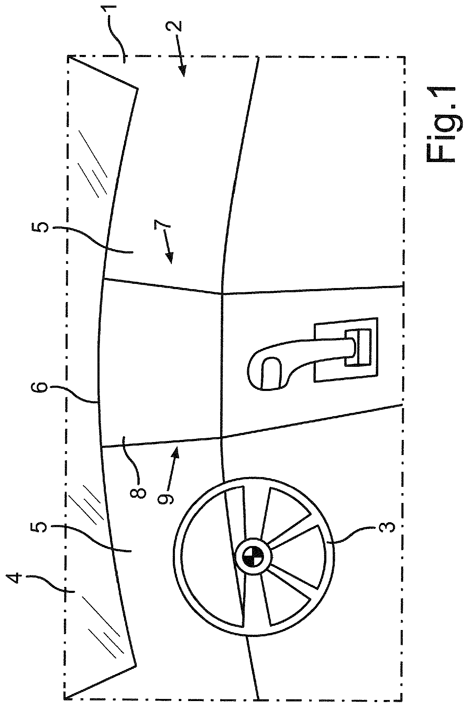

Bezug nehmend auf Fig. 1 beinhaltet ein als Personenkraftwagen ausgebildetes Kraftfahrzeug 1 einen Innenraum, dessen Frontbereich 2 in Fig. 1 schematisch dargestellt ist. Auf einer Fahrerseite befindet sich in an sich bekannter Weise ein Lenkrad 3, welches zwischen einer Windschutzscheibe 4 und einem in Fig. 1 nicht dargestellten Fahrersitz angeordnet ist und zur Lenkung der vorderen Räder des Kraftfahrzeugs 1 dient. Zwischen der Windschutzscheibe 4 einerseits und dem Lenkrad 3 andererseits ist ein Armaturenbrett 5 angeordnet, das sich in Fahrzeugquerrichtung über im Wesentlichen die gesamte Breite des Innenraums erstreckt und zu welchem eine Mittelkonsole 6 gehört. Die Mittelkonsole 6 befindet sich mittig zwischen dem Fahrersitz und dem Beifahrersitz.

In dem Kraftfahrzeug 1 ist ein Infotainmentsystem 7 fest installiert, welches in unterschiedlichen Betriebsmodi betrieben werden kann, wie insbesondere in einem Navigationsmodus, einem Telefonie-Modus, einem Internet-Modus und dergleichen. Das Infotainmentsystem 7 umfasst ein vorderes Display 8, welches zu einer insgesamt mit 9 bezeichneten Anzeigeeinrichtung des Kraftfahrzeugs 1 gehört. Das vordere Display 8 ist beispielsweise in Form eines LCD-Displays bereitgestellt, wobei die Erfindung nicht auf eine bestimme Display-Art beschränkt ist. Das vordere Display 8 ist beispielsweise in die Mittelkonsole 6 integriert, wie dies in Fig. 1 schematisch angedeutet ist.

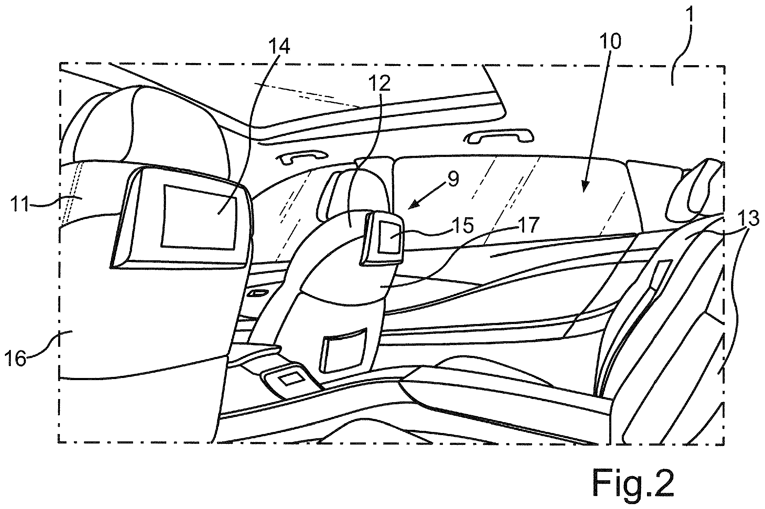

Ein Fondbereich 10 des Kraftfahrzeugs 1 ist in schematischer Darstellung in Fig. 2 gezeigt. Hier sind einerseits ein Fahrersitz 11 sowie ein Beifahrersitz 12 gezeigt, wie auch Fondsitze 13. Zur Anzeigeeinrichtung 9 gehören außerdem zwei hintere Displays, nämlich ein hinteres linkes Display 14 sowie ein hinteres rechtes Display 15. Das linke Display 14 ist dabei an einer Rückseite 16 des Fahrersitzes 11 angeordnet; das rechte Display 15 ist an einer Rückseite 17 des Beifahrersitzes 12 angeordnet. Auch die hinteren Displays 14, 15 können jeweils in Form eines LCD-Displays ausgebildet sein.

Zur Bedienung des Infotainmentsystems 7 kann sowohl im Frontbereich 2 als auch im Fondbereich 10 jeweils eine Bedieneinrichtung vorgesehen sein, welche beispielsweise einen Steuerknüppel bzw. Joystick beinhalten kann. Ergänzend oder alternativ können auch weitere Eingabeeinrichtungen bereitgestellt werden, wie beispielsweise eine Tastatur und/oder ein Spracherkennungssystem und/oder ein berührungsempfindliches Bedienfeld und dergleichen.

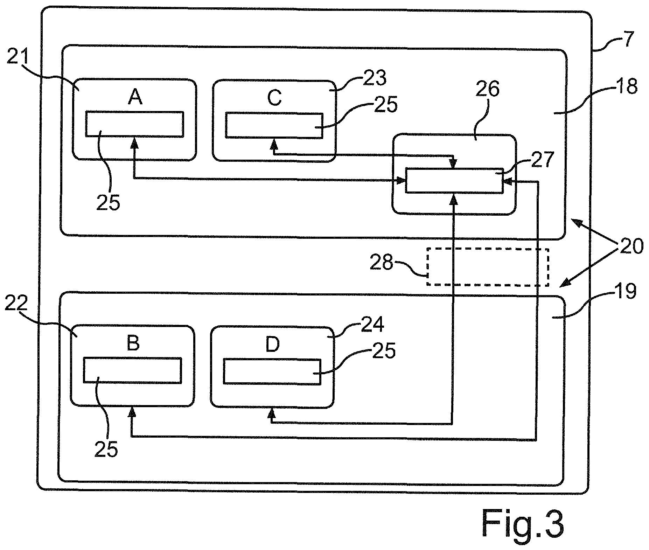

Wie bereits ausgeführt, kann das Infotainmentsystem 7 in verschiedenen Betriebsmodi betrieben werden. Auf dem Infotainmentsystem 7 können auch browserbasierte Applikationen bzw. Browseranwendungen ausgeführt werden. Ein Blockdiagramm des Infotainmentsystems 7 ist dabei in Fig. 3 näher dargestellt. Zur Ansteuerung des vorderen Displays 8 beinhaltet das Infotainmentsystem 7 einen ersten Signalprozessor 18, die so genannte "Haupteinheit". Zur Ansteuerung der hinteren Displays 14, 15 wiederum beinhaltet das Infotainmentsystem 7 des Kraftfahrzeugs 1 einen zweiten Signalprozessor 19, der beispielsweise im Fondbereich 10 angeordnet ist. Die beiden Signalprozessoren 18, 19 bilden insgesamt ein mit 20 bezeichnetes Rechensystem des Kraftfahrzeugs 1.

Sowohl auf dem ersten Signalprozessor 18 als auch auf dem zweiten Signalprozessor 19 können mehrere Browserinstanzen - basierend beispielsweise auf einem HTML5-Browser - ausgeführt werden, nämlich beispielsweise jeweils eine erste Browserinstanz 21 bzw. 22 (Browser A und B) sowie jeweils eine zweite Browserinstanz 23 bzw. 24 (Browser C und D). Jede Browserinstanz 21 bis 24 wird dabei jeweils mit einem Socket 25 (einem so genannten Websocket) bereitgestellt, d.h. einem Software-Modul, mittels welchem die Browserinstanzen 21 bis 24 untereinander kommunizieren können. Zu diesem Zwecke wird auf dem ersten Signalprozessor 18 zusätzlich auch ein Webserver 26 mit einem zugeordneten Socket 27 ausgeführt. Über den Socket 27 ist der Webserver 26 mit den jeweiligen Sockets 25 der Browserinstanzen 21 bis 24 kommunikationstechnisch verbunden. Die Verbindung zwischen dem Webserver 26 und den Browserinstanzen 21, 23 des ersten Signalprozessors 18 ist dabei eine softwaretechnische Verbindung, weil es sich hier um eine interne Kommunikation innerhalb des ersten Signalprozessors 18 handelt, d.h. eine so genannte Interprozesskommunikation. Demgegenüber ist zwischen dem ersten und dem zweiten Signalprozessor 18, 19 eine hardwaretechnische Kommunikationsverbindung 28 bereitgestellt, die zum Beispiel durch einen Fahrzeugbus realisiert werden kann. Die Datenkommunikation zwischen dem Webserver 26 einerseits und den Browserinstanzen 22, 24 des zweiten Signalprozessors 19 andererseits erfolgt somit über die Verbindung 28. Es kann sich hier zum Beispiel um eine Ethernet-Verbindung handeln.

Auf dem Webserver 26 wird eine zentrale "Message-Broker"-Anwendung implementiert, welche zur Vermittlung von Nachrichten zwischen den Browserinstanzen 21 bis 24 untereinander dient. Die Datenkommunikation zwischen den Browserinstanzen 21 bis 24 erfolgt also unter Vermittlung des Webservers 26, und zwar gemäß einem vorgegebenen Kommunikationsprotokoll. Dabei verbinden sich die Browserinstanzen 21 bis 24 mit dem zentralen Webserver 26.

Das genannte Kommunikationsprotokoll ist folgendermaßen definiert: Werden Daten beispielsweise von der Browserinstanz 21 (Browser A) an die Browserinstanzen 22, 23 und 24 (Browser B, C und D) übermittelt, so wird zunächst von der Sende-Browserinstanz 21 folgende Nachricht an den Webserver 26 übermittelt:

```
 Browser A → Server 26
 {
  "receiver": [
    "Browser B",
    "Browser C",
    "Browser D"
  ],
  "data": {
    "var": "hier werden die zu übermittelnden Daten angegeben"
    }
 }
```

In dieser Nachricht werden also die Empfangs-Browserinstanzen 22, 23, 24 bzw. ihre Sockets 25 eindeutig gekennzeichnet, wobei diese Nachricht zusätzlich noch die zu übermittelnden Daten beinhaltet. Nach dem Empfang dieser Nachricht sendet der Webserver 26 dann Einzelnachrichten an die jeweiligen Empfänger:

```
 Server 26 → Browser B
 {
  "sender": "Browser A",
  "data": {
    "var": " hier werden die Daten angegeben"
    }
 }
    Server 26 → Browser C
    {"sender": "Browser A",
  "data": {
    "var": " hier werden die Daten angegeben"
    }
 }
    Server 26 → Browser D
    {"sender": "Browser A",
  "data": {
    "var": " hier werden die Daten angegeben"
    }
 }
```

Vorzugsweise erfolgt dabei keine Rückmeldung von den Empfängern an den Sender.

Als Daten können beispielsweise textbasierte Dokumente, wie beispielsweise HTML-Daten und/oder JSON-Daten und/oder XML-Daten, übermittelt werden, welche zum aktuellen Zeitpunkt bei dem Sender verarbeitet bzw. ausgeführt werden. Ergänzend oder alternativ zu den HTML-Daten können im Rahmen der Datenkommunikation auch Daten übermittelt werden, welche lediglich die beim Sender aktuell ausgeführte Browseranwendung und/oder die aktuell angezeigte Browserdarstellung angeben.

Die Empfangs-Browserinstanzen 21 bis 24 können die empfangenen Daten dann dazu nutzen, um die gleiche Browserdarstellung auf dem jeweiligen Display 8, 14, 15 darzustellen, wie sie zum aktuellen Zeitpunkt auch durch die Sende-Browserinstanz 21 bis 24 bereitgestellt wird. Es können somit insgesamt die angezeigten Dateninhalte sowohl zwischen den beiden hinteren Displays 14, 15 als auch zwischen dem vorderen Display 8 und den hinteren Displays 14, 15 aneinander angeglichen werden.

Beispielsweise ist es somit möglich, Applikationen zu implementieren, die auf der Datenkommunikation zwischen den verschiedenen Browserinstanzen 21 bis 24 beruhen, wie zum Beispiel Mehrbenutzerspiele und dergleichen.

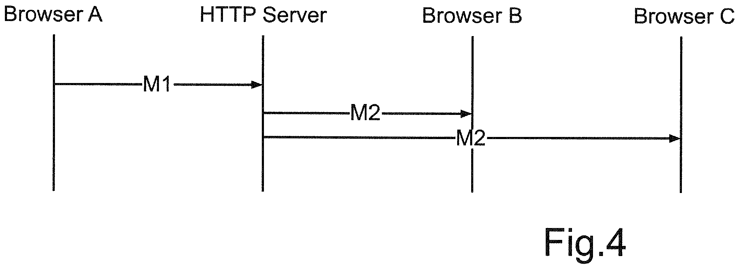

Ein Sequenzdiagramm einer Datenübertragung von der Browserinstanz 21 (Browser A) an die Browserinstanzen 22, 23 (Browser B und C) unter Vermittlung des Webservers 26 (HTTP-Server) ist in Fig. 4 schematisch gezeigt. Wie aus Fig. 4 hervorgeht, übermittelt die Sende-Browserinstanz 21 eine Nachricht M1 entsprechend dem oben genannten Kommunikationsprotokoll an den Webserver 26. Diese Nachricht M1 beinhaltet die zu übermittelnden Daten sowie kennzeichnet auch die Empfangs-Browserinstanzen 22, 23. Der Webserver 26 empfängt die Nachricht M1 und sendet dann Einzelnachrichten M2 (kein Broadcast) an die jeweiligen Empfangs-Browserinstanzen 22, 23. Diese Nachrichten M2 geben einerseits die Sende-Browserinstanz 21 an und beinhalten andererseits die durch den Server 26 von der Sende-Browserinstanz 21 empfangenen Daten.

## Patentansprüche

1. Verfahren zum Betreiben eines Infotainmentsystems (7) eines Kraftfahrzeugs (1), bei welchem auf einem Rechensystem (20) des Infotainmentsystems (7) zumindest zwei Browserinstanzen (21, 23) bereitgestellt werden, welche jeweils eine Browseranwendung ausführen und hierbei eine graphische Browserdarstellung zur Anzeige auf einer Anzeigeeinrichtung (9) des Infotainmentsystems (7) bereitstellen, **dadurch gekennzeichnet, dass**
die zumindest zwei Browserinstanzen (21, 23) jeweils mit einem Socket (25) bereitgestellt werden und auf dem Rechensystem (20) des Infotainmentsystems (7) ein Webserver (26) mit einem Socket (27) ausgeführt wird, der mit den Sockets (25) der jeweiligen Browserinstanzen (21, 23) zum Datenaustausch verbunden ist,
wobei unter Vermittlung des Webservers (26) eine zumindest unidirektionale Datenkommunikation zwischen den zumindest zwei Browserinstanzen (21, 23) über die jeweiligen Sockets (25, 27) gemäß einem vorbestimmten Kommunikationsprotokoll durchgeführt wird; wobei
unter Vermittlung des Webservers (26) die Datenkommunikation zwischen den zumindest zwei Browserinstanzen (21, 23) durchgeführt wird, welche auf ein und demselben ersten Signalprozessor (18)
des Rechensystems (20) ausgeführt werden und deren Browserdarstellungen auf voneinander separaten Displays (8, 14, 15) der Anzeigeeinrichtung (9) angezeigt werden, wobei der Webserver (26) auf demselben ersten Signalprozessor (18) ausgeführt wird, wie die zumindest zwei Browserinstanzen (21, 23).

2. Verfahren nach Anspruch 1,
**dadurch gekennzeichnet, dass**
bei der Datenkommunikation gemäß dem vorgegebenen Kommunikationsprotokoll durch eine Sende-Browserinstanz der zumindest zwei Browserinstanzen (21, 23) an den Webserver (26) eine Nachricht übermittelt wird, welche zumindest eine Empfangs-Browserinstanz der zumindest zwei Browserinstanzen (21, 23) eindeutig angibt und die zu übermittelnden Daten beinhaltet, welche durch den Webserver (26) an die zumindest eine Empfangs-Browserinstanz (21, 23) weitergeleitet werden.

3. Verfahren nach Anspruch 2,
**dadurch gekennzeichnet, dass**
falls in der Nachricht der Sende-Browserinstanz (21, 23) mehrere Empfangs-Browserinstanzen der zumindest zwei Browserinstanzen (21, 23) angegeben sind, die Daten durch den Webserver (26) einzeln an die jeweiligen Empfangs-Browserinstanzen (21, 23) übermittelt werden.

4. Verfahren nach einem der vorhergehenden Ansprüche,
**dadurch gekennzeichnet, dass**
im Rahmen der Datenkommunikation textbasierte Daten, insbesondere HTML-Daten und/oder JSON-Daten und/oder XML-Daten, übermittelt werden.

5. Verfahren nach einem der vorhergehenden Ansprüche,
**dadurch gekennzeichnet, dass**
im Rahmen der Datenkommunikation von einer Sende-Browserinstanz der zumindest zwei Browserinstanzen (21, 23) an eine Empfangs-Browserinstanz der zumindest zwei Browserinstanzen (21, 23) Daten übermittelt werden, welche die aktuell ausgeführte Browseranwendung und/oder Browserdarstellung der Sende-Browserinstanz (21, 23) angeben.

6. Verfahren nach einem der vorhergehenden Ansprüche,
**dadurch gekennzeichnet, dass**
unter Vermittlung des Webservers (26) die Datenkommunikation durchgeführt wird zwischen einer der zumindest zwei Browserinstanzen (21, 23) und einer weiteren Browserinstanz (22, 24), die auf einem separaten zweiten Signalprozessor (19) des Rechensystems (20) ausgeführt wird, wobei der erste Signalprozessor (18) und der zweite Signalprozessor (19) miteinander gekoppelt sind und der Webserver (26) auf dem ersten Signalprozessor (18) ausgeführt wird.

7. Verfahren nach Anspruch 6,
**dadurch gekennzeichnet, dass**
auf dem ersten Signalprozessor (18) eine der zumindest zwei Browserinstanzen (21, 23) ausgeführt wird und deren Browserdarstellung auf einem in einem Frontbereich (2) des Kraftfahrzeugs (1) angeordneten Display (8) angezeigt wird, und dass auf dem zweiten Signalprozessor (19) die weitere Browserinstanz (22, 24) ausgeführt wird, deren Browserdarstellung auf einem in einem Fondbereich (10) des Kraftfahrzeugs (1) angeordneten Display (14, 15) angezeigt wird.

8. Kraftfahrzeug (1) mit einem Infotainmentsystem (7), wobei das Infotainmentsystem (7) dazu ausgelegt ist, ein Verfahren nach einem der vorhergehenden Ansprüche durchzuführen.

## Claims

1. Method for operating an infotainment system (7) of a motor vehicle (1), in which at least two browser instances (21, 23) are provided on a computing system (20) of the infotainment system (7), said browser instances each executing a browser application and in so doing providing a graphical browser representation for display on a display device (9) of the infotainment system (7),
**characterized in that**
the at least two browser instances (21, 23) are each provided so as to have a socket (25), and a web server (26) having a socket (27) connected to the sockets (25) of the respective browser instances (21, 23) for the purpose of data interchange is executed on the computing system (20) of the infotainment system (7), wherein an at least unidirectional data communication with the mediation of the web server (26) is carried out between the at least two browser instances (21, 23) via the respective sockets (25, 27) according to a predetermined communication protocol; wherein
the data communication with the mediation of the web server (26) is carried out between the at least two browser instances (21, 23), which are executed on one and the same first signal processor (18) of the computing system (20),
and the browser representations of said browser instances are displayed on separate displays (8, 14, 15) of the display device (9), the web server (26) being executed on the same first signal processor (18) as the at least two browser instances (21, 23).

2. Method according to Claim 1,
**characterized in that**
the data communication according to the predefined communication protocol involves a transmitting browser instance among the at least two browser instances (21, 23) transmitting to the web server (26) a message that explicitly indicates at least one receiving browser instance among the at least two browser instances (21, 23) and contains the data to be transmitted, which are forwarded to the at least one receiving browser instance (21, 23) by the web server (26).

3. Method according to Claim 2,
**characterized in that**
if the message from the transmitting browser instance (21, 23) indicates multiple receiving browser instances among the at least two browser instances (21, 23), the data are transmitted to the respective receiving browser instances (21, 23) by the web server (26) individually.

4. Method according to one of the preceding claims,
**characterized in that**
the data communication involves text-based data, in particular HTML data and/or JSON data and/or XML data, being transmitted.

5. Method according to one of the preceding claims,
**characterized in that**
the data communication involves data that indicate the currently executed browser application and/or browser representation of the transmitting browser instance (21, 23) being transmitted from a transmitting browser instance among the at least two browser instances (21, 23) to a receiving browser instance among the at least two browser instances (21, 23).

6. Method according to one of the preceding claims,
**characterized in that**
the data communication with the mediation of the web server (26) is carried out between one of the at least two browser instances (21, 23) and a further browser instance (22, 24), which is executed on a separate second signal processor (19) of the computing system (20), the first signal processor (18) and the second signal processor (19) being coupled to one another and the web server (26) being executed on the first signal processor (18).

7. Method according to Claim 6,
**characterized in that**
one of the at least two browser instances (21, 23) is executed on the first signal processor (18), and the browser representation of said one browser instance is displayed on a display (8) arranged in a front region (2) of the motor vehicle (1), and **in that** the further browser instance (22, 24) is executed on the second signal processor (19), the browser representation of said further browser instance being displayed on a display (14, 15) arranged in a rear region (10) of the motor vehicle (1).

8. Motor vehicle (1) having an infotainment system (7), wherein the infotainment system (7) is designed to carry out a method according to one of the preceding claims.

## Revendications

1. Procédé d'exploitation d'un système d'infodivertissement (7) d'un véhicule automobile (1), dans lequel, sur un système informatique (20) du système d'infodivertissement (7), au moins deux instances de navigateur (21, 23) sont fournies qui exécutent respectivement une application de navigateur tout en fournissant une représentation graphique de navigateur à afficher sur un dispositif d'affichage (9) du système d'infodivertissement (7),
**caractérisé en ce que** les au moins deux instances de navigateur (21, 23) sont fournies respectivement avec un socket (25), et sur le système informatique (20) du système d'infodivertissement (7) est exécuté un serveur web (26) avec un socket (27) qui est relié aux sockets (25) des instances de navigateur (21, 23) respectives en vue d'un échange de données,
dans lequel, par l'intermédiaire du serveur web (26), une communication de données au moins unidirectionnelle entre les au moins deux instances de navigateur (21, 23) est effectuée par les sockets (25, 27) respectifs selon un protocole de communication prédéterminé ; dans lequel
par l'intermédiaire du serveur web (26), la communication de données est effectuée entre les au moins deux instances de navigateur (21, 23) qui sont exécutées sur un seul et même premier processeur de signaux (18) du système informatique (20) et dont les représentations de navigateur sont affichées sur des écrans (8, 14, 15) séparés les uns des autres du dispositif d'affichage (9), le serveur web (26) étant exécuté sur le même premier processeur de signaux (18) que les au moins deux instances de navigateur (21, 23).

2. Procédé selon la revendication 1, **caractérisé en ce que** lors de la communication de données selon le protocole de communication prédéfini, une instance de navigateur d'émission des au moins deux instances de navigateur (21, 23) transmet au serveur web (26) un message qui indique de manière univoque au moins une instance de navigateur de réception des au moins deux instances de navigateur (21, 23) et contient les données à transmettre qui sont retransmises par le serveur web (26) à ladite au moins une instance de navigateur de réception (21, 23).

3. Procédé selon la revendication 2, **caractérisé en ce que**, si dans le message de l'instance de navigateur d'émission (21, 23), plusieurs instances de navigateur de réception des au moins deux instances de navigateur (21, 23) sont indiquées, les données sont transmises par le serveur web (26) individuellement aux instances de navigateur de réception (21, 23) respectives.

4. Procédé selon l'une quelconque des revendications précédentes, **caractérisé en ce que** dans le cadre de la communication de données, des données à base de texte, en particulier des données HTML et/ou des données JSON et/ou des données XML, sont transmises.

5. Procédé selon l'une quelconque des revendications précédentes, **caractérisé en ce que** dans le cadre de la communication de données, une instance de navigateur d'émission des au moins deux instances de navigateur (21, 23) transmet à une instance de navigateur de réception des au moins deux instances de navigateur (21, 23) des données qui indiquent l'application de navigateur actuellement exécutée et/ou la représentation de navigateur de l'instance de navigateur d'émission (21, 23).

6. Procédé selon l'une quelconque des revendications précédentes, **caractérisé en ce que** par l'intermédiaire du serveur web (26), la communication de données est effectuée entre l'une des au moins deux instances de navigateur (21, 23) et une autre instance de navigateur (22, 24) qui est exécutée sur un deuxième processeur de signaux (19) séparé du système informatique (20), le premier processeur de signaux (18) et le deuxième processeur de signaux (19) étant couplés ensemble, et le serveur web (26) étant exécuté sur le premier processeur de signaux (18).

7. Procédé selon la revendication 6, **caractérisé en ce que** sur le premier processeur de signaux (18), l'une des au moins deux instances de navigateur (21, 23) est exécutée et sa représentation de navigateur est affichée sur un écran (8) disposé dans une partie avant (2) du véhicule automobile (1), et **en ce que** sur le deuxième processeur de signaux (19), l'autre instance de navigateur (22, 24) est exécutée dont la représentation de navigateur est affichée sur un écran (14, 15) disposé dans une zone de fond (10) du véhicule automobile (1).

8. Véhicule automobile (1) comprenant un système d'infodivertissement (7), le système d'infodivertissement (7) étant conçu pour effectuer un procédé selon l'une quelconque des revendications précédentes.
